# EUROPEAN PATENT SPECIFICATION

(11) **EP 2 934 082 B1**
(45) Date of publication and mention of the grant of the patent: **11.07.2018**
(21) Application number: 13865096.5
(22) Date of filing: 18.12.2013
(51) Int. Cl.: A01C 7/08, A01C 15/04, A01C 7/10

(54) **METHOD FOR CONTROLLING AN AGRICULTURAL IMPLEMENT, AND AGRICULTURAL IMPLEMENT**
VERFAHREN ZUR STEUERUNG EINER LANDWIRTSCHAFTLICHEN VORRICHTUNG UND LANDWIRTSCHAFTLICHE VORRICHTUNG
PROCÉDÉ DE COMMANDE D'UN OUTIL AGRICOLE ET OUTIL AGRICOLE

(30) Priority: 18.12.2012 SE 1251452
(43) Date of publication of application: 28.10.2015
(73) Proprietor: Väderstad Holding AB, 590 21 Väderstad (SE)
(72) Inventor: ANDERSSON, Leif, 387 93 Borgholm (SE)
(74) Representative: AWA Sweden AB
(86) International application number: PCT/SE2013/051548
(87) International publication number: WO 2014/098749

(56) References cited:
- WO-A2-2012/170690
- DE-A1-102004 025 758
- DE-A1-102009 025 744
- US-A- 6 158 363
- US-A1- 2010 313 801
- US-A1- 2010 313 801
- US-A1- 2011 035 163
- US-A1- 2012 312 211
- US-A1- 2014 049 395
- US-B1- 6 584 920

## Description

### Technical field

The present document relates to a method for controlling a device for feeding material in an agricultural implement and to an agricultural implement having such a device.

### Background

There are agricultural implements which comprise one or more devices for feeding granular or powdery material from a container to an air flow, wherein the air flow conducts the material to one or more placement devices, such as seed coulters or fertilizer coulters, which control the placement of the material in or on the ground over which the agricultural implement is transported.

The terms "fertilizer coulters" and "seed coulters" should in this context be regarded as comprising both pin-like arrangements, arrangements comprising one or more disks (seed disks, fertilizer disks), and other arrangements for mixing granular or powdery material into the soil.

Granular or powdery material can be seed, fertilizer, pesticide or the like.

In for instance patent document US2010313801, there is described a type of air assisted planting system.

In agricultural implements according to that which has been described above, a fan, which generates the air flow, is often utilized. The magnitude of the air flow is generally controlled by adjustment of a fan speed. If this fan speed is too high, a waste of power is produced. In addition, if the air flow is too great, problems in introducing material to the air flow can arise. Moreover, if the air flow, and thus also the discharge velocity of the material, is too great, problems in feeding out the material can arise. In such cases, seeds can, for example, ricochet against the ground and end up outside the furrow in which they are meant to be placed.

If the fan speed is too low, pulsations can arise in the feed system, whereupon the discharge flow becomes uneven. In the worst-case scenario, the feed system can completely clog up.

The speed can be adjusted by the user inputting the type of crop (or a value which is assignable to the type of crop), as well as the desired feed rate, into the control unit of the agricultural implement. The control unit then chooses a fan speed on the basis of a table or formula which has been derived from empirical studies conducted by the manufacturer of the implement.

It will be appreciated that variations can occur both in the material which is to be fed and in the environmental conditions which can impact on the attained discharge performance. Thus variations can occur in, for example, the quantity of discharged seed, fertilizer and/or pesticide, which can lead to deviations from what has been regarded as an optimal discharge result.

There is therefore a desire to achieve improved quality in the discharge.

### Summary

One object of the present document is to provide a method and an agricultural implement which give improved discharge quality.

The invention is defined by the appended independent claims. Embodiments emerge from the dependent claims, the appended drawings, and from the following description.

According to a first aspect, a method for controlling an agricultural implement comprising a feed device for feeding granular or powdery material is provided. The method comprises generating of an air flow and feeding of the material with the aid of the air flow. The method also comprises measuring a first parameter relating to the air flow while the material is fed with the aid of the air flow, and controlling the generation of the air flow on the basis of the first parameter.

By measuring a parameter relating to the air flow and controlling the generation of the air flow on the basis of the parameter, it is possible to produce a more stable and more energy-efficient feed. In addition, both continuous adjustment of optimal air flow during operation and alarms in the event of possible faults can be realized.

The method can further comprise controlling the air flow in order to achieve a predetermined parameter value.

By "predetermined parameter value" is meant a value, a range or a value with tolerances.

The predetermined parameter value can be determined on the basis of at least the type of material. According to the invention the first parameter is a pressure, and the first parameter is measured in a distributor, in which material-entraining air flow is distributed from an inlet to at least two outlets. The method can comprise, while the material is fed with the aid of the air flow, measuring a second parameter relating to the air flow, and controlling the generation of the air flow on the basis also of the second parameter.

The second parameter can be the same parameter type as the first parameter and be measured at a measuring point in the feed device which is different from a point at which the first parameter is measured.

The second parameter can be of a different parameter type than the first parameter and be measured at substantially the same measuring point in the feed device as the first parameter.

The second parameter can be of a different parameter type than the first parameter and be measured at a measuring point in the feed device which is different from a point at which the first parameter is measured.

The air flow can at least partially be controlled by regulation of a fan speed.

The air flow can at least partially be controlled by regulation of a damper.

According to a second aspect, an agricultural implement comprising a feed device for feeding granular or powder material is provided. The agricultural implement comprises an air flow generating device, a material injection device, for mixing material into the air flow, and a control unit, for controlling the air flow generating device. In the agricultural implement, a first measuring sensor is arranged to measure, while the material is fed with the aid of the air flow, a first parameter relating to the air flow, and the control unit is arranged to receive a signal from the measuring sensor and to control the air flow generating device on the basis of the signal from the first measuring sensor, wherein the first measuring sensor is a pressure sensor which is arranged such that the parameter is measured in a distributor, in which material-entraining air flow is distributed from an inlet to at least two outlets. The control unit can be arranged to control the air flow generating device by regulating a fan speed and/or by regulating a degree of opening of a damper.

The measuring device can further comprise a second measuring sensor, which is arranged to measure, while the material is fed with the aid of the air flow, a second parameter relating to the air flow, and the control unit can be arranged to receive a signal from the second measuring sensor and to control the air flow generating device on the basis also of the signal from the second measuring sensor.

### Brief description of the drawings

Fig. 1 is a perspective view of an agricultural implement 1, viewed obliquely from the rear.
Fig. 2 is a sectional view of a combined seed box and fertilizer box 10 with feed device, taken along the direction of travel F of an agricultural implement supporting the seed box.
Fig. 3 is a perspective view of a feed device 2 for feeding granular material from a container to an air flow.
Fig. 4 is a perspective view of a distributor head.

### Description of embodiments

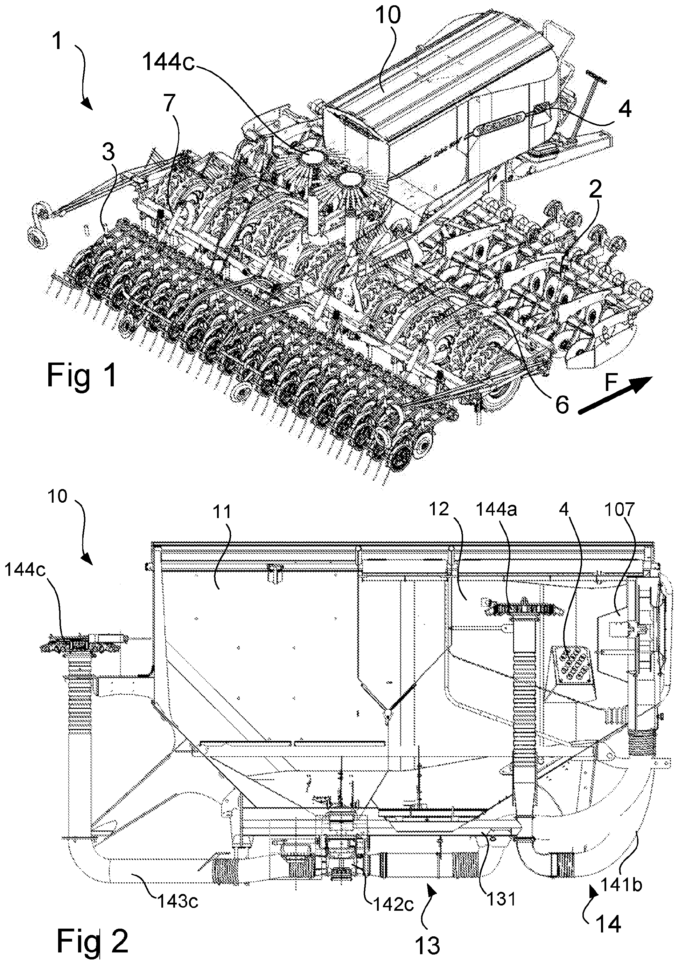

Fig. 1 shows a seed drill 1 viewed obliquely from the rear/from above. The seed drill is intended to travel, during use, in a driving direction F.

The seed drill 1 comprises a seed box 10, which accommodates a chamber 11 for seed and a chamber 12 for fertilizer (fig. 2). The seed drill further comprises a plurality of fertilizer coulters 2 and a plurality of seed coulters 3. The fertilizer coulters 2 are connected by tubes (not shown) to sockets 4 in the seed box. The sockets 4 are in turn connected to a distributor head 144a, which in turn connects to a transport device 14 for air-flow-based fertilizer feeding.

The seed coulters 3 are connected by tubes (not shown) to a respective distributor head 144b, 144c, which in turn are connected to a feed device for air-flow-based seed feeding.

The fertilizer coulters 2 and/or the seed coulters 3 can have a respective height adjustment device 6, 7, which can comprise one or more actuators, for example hydraulic actuators, and which can be used to adjust the height position of the fertilizer coulters 2 and/or seed coulters 3 in relation to the seed drill 1, and thus to adjust the working depth.

The height adjustment device 6, 7 can also be utilized to lift the fertilizer coulters 2 and/or the seed coulters 3 out of engagement with the ground, for example into a field transport position, which is utilized when turning, or into a transport position, which is utilized in road transport.

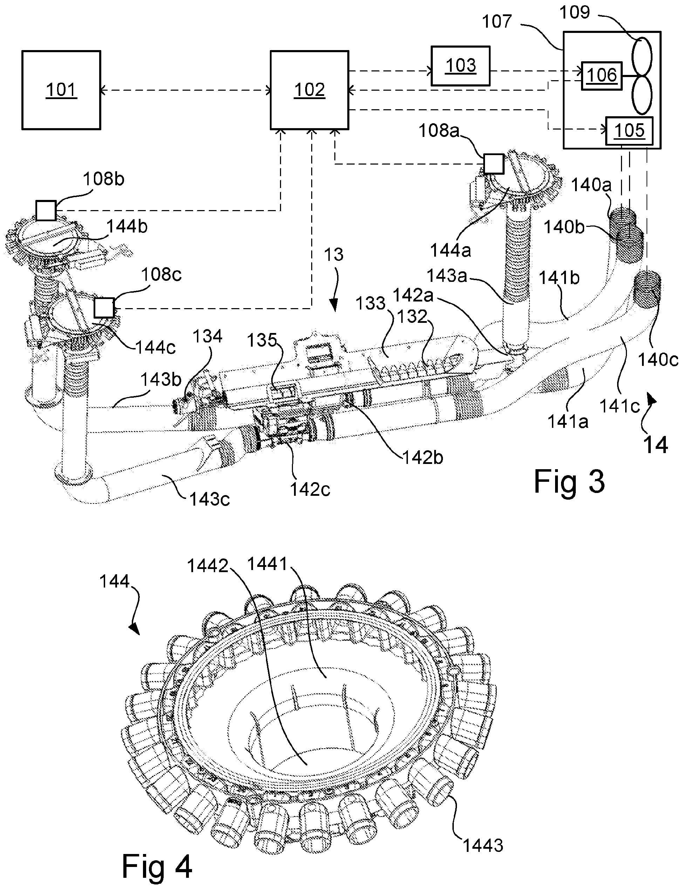

Fig. 2 shows a seed box 10 and fig. 3 shows the feed system of the seed box.

A first feed device 13 is arranged to feed fertilizer from a lower portion of the fertilizer chamber 12 to the transport device 14 for air-flow-based feeding of the fertilizer to one or more fertilizer coulters 2. The fertilizer chamber 12 has inner walls sloping toward the feed device 13, so that fertilizer stored in the chamber falls down toward the feed device 13 by the influence of gravity.

The first feed device 13 comprises a feed duct 131, which is arranged substantially horizontally and accommodates a feed screw 132, which is arranged to conduct fertilizer from the feed inlet 133 to an injection part 142a, in which the fertilizer is transferred to the transport device 14. The feed device 13 has a drive unit 134, the driving of which, i.e. speed and direction of rotation, is controlled by a control unit 102.

The transport device 14 comprises respective ducts 141a, 141b, 141c, 143a, 143b, 143c. Each of the ducts has an inlet 140a, 140b, 140c, which is connected to a fan unit 107. The fan unit 107 can be configured as a fan housing having a fan wheel 109 and a plurality of outputs, wherein the ducts 141a, 141b, 141c are connected to the respective outputs. The fan wheel 109 can be of the radial type, preferably with substantially rearwardly inclined or substantially rearwardly curved blades. A fan motor 106 is arranged to drive the fan wheel 109, and dampers 105, preferably one damper for each of the ducts 141a, 141b, 141c, can be arranged to regulate and balance outgoing air flows. The dampers can be individually and continuously adjustable between respectively fully open and fully closed positions. The fan motor 106 can be a hydraulic motor, preferably with continuously controllable speed.

A second feed device 135 is arranged to feed seed from a lower portion of the seed chamber 11 to second and third transport devices 140b, 141b, 143b; 140c, 141c, 142c, 143c for air-flow-based feeding of the seed to the respective distributor head 144b, 144c.

The seed chamber 11 has inner walls sloping toward the second feed device, so that seed stored in the chamber falls down toward the second and third feed devices by the influence of gravity.

The first transport system thus comprises an inlet air duct 141a, the inlet 140a of which is connected to an outlet of the fan unit 107. The inlet air duct 141a connects to an injection unit 142a, in which material (here fertilizer) which is fed by means of the first feed device 13 is injected to the air flow in the inlet air duct 141a. The material-entraining air flow is conducted in a duct 143a to the distributor head 144a, in which the material-entraining air flow is divided into a number of material-entraining air flows, for onward transport to the fertilizer coulters 2.

Correspondingly, the second and third transport systems comprise respective inlet air ducts 141b, 141c, the inlets 140b, 140c of which are connected to respective outlets of the fan unit 107. The inlet air ducts 141b, 141c connect to respective injection units 142b, 142c, in which material (here seed) which is fed by means of the second and third feed devices is injected to the air flows in the inlet air ducts 141b, 141c. The material-entraining air flows are led in respective ducts 143b, 143c to respective distributor heads 144b, 144c, in which the material-entraining air flows are divided into a number of material-entraining air flows, for onward transport to the seed coulters 3.

A user interface 101 is connected to a control unit 102, which can be an integrated control unit for controlling all or several different functions of the agricultural implement 1. An automatic control system 103 can be arranged for regulating the speed of the fan motor 106 on the basis of a control signal from the control unit 102.

In the distributor heads, pressure sensors 108a, 108b, 108c are arranged for measuring air pressure in respective distributor heads 144a, 144b, 144c. The pressure sensors 108a, 108b, 108c are connected to the control unit 102.

The control unit 102 is thus arranged to receive signals corresponding to air pressure in the respective distributor heads 144a, 144b, 144c, and to produce control signals to the automatic control system 103 and the dampers 105. By empirical testing, target values (or ranges of target values) for air pressure in the respective distributor heads and for the respective type of material and feed rate can be derived. Such target values can be stored in memory in the control unit 102.

Prior to operation, the user gives via the user interface 101 data corresponding to the type of material (crop, fertilizer, pesticide), as well as desired feed rate, which can be a value per unit of surface area, to be adjusted on the basis of driving speed.

The control unit 102 receives data from the user interface and determines target values (or target value ranges). During operation, the control unit receives signals corresponding to current air pressure from each of the pressure sensors 108a, 108b, 108c and determines for each of these whether current air pressure is acceptable in relation to the corresponding target value.

If the current air pressure indicates too high a flow in a distributor head 144a, 144b, 144c, corresponding dampers 105 can be closed somewhat in order to lower the flow.

If the current air pressure indicates too low a flow in a distributor head 144a, 144b, 144c, corresponding dampers 105 can be opened somewhat in order to increase the flow.

If the current air pressure indicates too high a flow in all distributor heads 144a, 144b, 144c, the speed of the fan motor 106 can be reduced in order to lower the flow and also save energy.

If the current air pressure indicates too low a flow in all distributor heads 144a, 144b, 144c, the speed of the fan motor 106 can be increased.

It is also possible to determine upper or lower alarm levels for the respective air pressure, which enables an alarm to be raised in the event of faults, such as blockage of, or leakage from, one of the transport devices.

In a first control loop, the air pressure in the distributor heads for seed 142b, 142c is measured, wherein the control unit 102 receives a measurement signal corresponding to the air pressure. The control unit then controls directly, or via the automatic control unit 103, the fan speed.

In a second control loop, the air pressure in the distributor head 142a for fertilizer is measured, wherein the control unit 102 receives a measurement signal corresponding to the air pressure. The control unit then controls directly, or via the automatic control unit 103, the degree of opening of the individual dampers 105.

Fig. 4 shows a distributor head 144 in detail. The distributor head has a casing 1441, an inlet 1442, which is connected to the duct 143a, 143b, 143c, and a plurality of outlets 1443, which are each connected to a respective placement device. As can be seen from fig. 3, a cap can close off the upper opening of the distributor head. The pressure sensor 108a, 108b, 108c can be placed, for example, in or on the casing 1441, or alternatively in or on the cap.

The fan motor 106 can comprise a hydraulic motor, which can receive hydraulic pressure and feed from, for example, the hydraulic system of a towing vehicle, such as a load-sensing hydraulic system.

One possibility is to utilize a so-called "round pumping system", which corresponds to a load-sensing ("LS") system, a hydraulic system, but has no hydraulic signal line.

Load-sensing systems are known and exist as standard or optional equipment for most tractor models. A load-sensing system is characterized in that a variable hydraulic pump is controlled so that delivered flow and pressure corresponds to the existing requirement, i.e. the load. Load-sensing hydraulic systems are used typically when a number of different loads are present. With a load-sensing system, a single hydraulic feed (consisting of feed line and return line, as well as a hydraulic signal line) is realized from towing vehicle to agricultural implement. The agricultural implement can then be provided with a hydraulics power pack, which is often referred to as a "hydraulic block", from which hydraulic fluid having desired properties (flow, pressure) is distributed with the aid of controllable valves to different consuming units. The distribution is realized with the aid of controllable valves, which in turn are controlled with the aid of control signals from a control unit. The control unit can communicate with a user interface which can be arranged in the towing vehicle with the aid of a wire-bound (twisted pair, coaxial, fiber optic) or wireless data transmission interface in a manner which is known per se. With the aid of a load-sensing system, a plurality of hydraulic functions of the agricultural implement can thus be controlled from the towing vehicle purely on the basis of instructions which the user delivers via an electronic user interface. In an embodiment not according to the invention one or more of the pressure sensors 108a, 108b, 108c can be replaced with, for example, a thermal gas flow meter, i.e. a transmitter which comprises a heated sensor element which is cooled by the mass of the gas flow, and in which the arisen temperature difference is proportional to the gas mass flow and gives information on flow velocity and quantity. As a further alternative, a material flow meter can be used, i.e. a meter which, for example optical or acoustically, calculates velocity of and/or quantity of material transported in the duct.

In the above, fertilizer has been used as an example of material which can be fed out. The described system and the method can also be utilized for other types of granular or powdery material, such as seed or pesticide.

In the above, drive units for fan and feed devices have been exemplified as hydraulically driven motors. It will be appreciated that other types of drive motors can be utilized, such as electric motors or motors which are driven with the aid of a ground wheel. It is possible to utilize a transmission for controlling, for example, the speed of the fan.

The description has further been geared to a machine having a combined seed box and fertilizer box, while it will be appreciated that the described system and the method can also be utilized for other types of agricultural implements, such as pure seed drills and pure fertilizer implements or pesticide implements.

One or more of the feed devices can be provided with a second transmitter. This second transmitter can be arranged to measure the same parameters as the first transmitter, but at a different place in the feed device.

Alternatively, the second transmitter can be arranged to measure a different parameter at the same place as the first transmitter. It is also possible for the second transmitter to measure a different parameter than the first transmitter and at a different place than the first transmitter.

The control unit can be arranged to control a respective feed device on the basis of both a measurement value from the first transmitter and a measurement value from the second transmitter.

For example, the first transmitter (in one or more of the feed devices) can be a pressure transmitter according to that which has been described above. A second transmitter can then be a transmitter which measures material flow (such as a seed counter or the like). This second transmitter can be placed upstream of, downstream of, or directly adjacent to the first transmitter.

## Claims

1. A method for controlling an agricultural implement (1) comprising a feed device (13, 14) for feeding granular or powdery material, comprising:
generating an air flow,
feeding the material with the aid of the air flow,
measuring a first parameter relating to the air flow while the material is fed with the aid of the air flow, and
controlling the generation of the air flow on the basis of the first parameter
**characterized in that**
the first parameter is a pressure, and
the first parameter is measured in a distributor (144a, 144b, 144c), in which material-entraining air flow is distributed from an inlet to at least two outlets.

2. The method as claimed in claim 1, further comprising controlling the air flow in order to achieve a predetermined parameter value.

3. The method as claimed in claim 2, wherein the predetermined parameter value is determined on the basis of at least the type of material.

4. The method as claimed in any one of the preceding claims, wherein the first parameter is measured downstream of the mixing of the material into the air flow.

5. The method as claimed in any one of the preceding claims, further comprising, while the material is fed with the aid of the air flow, measuring a second parameter relating to the air flow, and controlling the generation of the air flow on the basis also of the second parameter.

6. The method as claimed in claim 5, wherein the second parameter is the same parameter type as the first parameter and is measured at a measuring point in the feed device which is different from a point at which the first parameter is measured.

7. The method as claimed in claim 5, wherein the second parameter is of a different parameter type than the first parameter and is measured at substantially the same measuring point in the feed device as the first parameter.

8. The method as claimed in claim 5, wherein The second parameter is of a different parameter type than the first parameter and is measured at a measuring point in the feed device which is different from a point at which the first parameter is measured.

9. The method as claimed in any one of the preceding claims, wherein the air flow is at least partially controlled by regulation of a fan speed.

10. The method as claimed in any one of the preceding claims, wherein the air flow is at least partially controlled by regulation of a damper.

11. An agricultural implement comprising a feed device (13, 14) for feeding granular or powder material, comprising:
an air flow generating device (107),
a material injection device (142a, 142b, 142c), for mixing material into the air flow, and
a control unit (102), for controlling the air flow generating device (107),
wherein a first measuring sensor (108a, 108b, 108c) is arranged to measure, while the material is fed with the aid of the air flow, a first parameter relating to the air flow, and
wherein the control unit (102) is arranged to receive a signal from the first measuring sensor and to control the air flow generating device (107) on the basis of the signal from the first measuring sensor (108a, 108b, 108c)
**characterized in that**
the first measuring sensor (108a, 108b, 108c) is a pressure sensor, and
the first measuring sensor is arranged such that the parameter is measured in a distributor (144a, 144b, 144c), in which material-entraining air flow is distributed from an inlet to at least two outlets.

12. The agricultural implement as claimed in claim 11, wherein the control unit (102) is arranged to control the air flow generating device (107) by regulating a fan speed and/or by regulating a degree of opening of a damper (105).

13. The agricultural implement as claimed in any one of claims 11 or 12, further comprising:
a second measuring sensor arranged to measure a second parameter relating to the air flow while the material is fed with the aid of the air flow,
wherein the control unit (102) is arranged to receive a signal from the second measuring sensor and to control the air flow generating device (107) on the basis also of the signal from the second measuring sensor.

## Patentansprüche

1. Verfahren zum Steuern eines landwirtschaftlichen Geräts (1), umfassend eine Vorschubvorrichtung (13, 14) zum Vorschieben von körnigem oder pulvrigem Material, umfassend:
Erzeugen eines Luftstroms,
Vorschieben des Materials mit der Hilfe des Luftstroms,
Messen eines ersten Parameters, der den Luftstrom betrifft, während das Material mit der Hilfe des Luftstroms vorgeschoben wird, und
Steuern der Erzeugung des Luftstroms auf der Basis des ersten Parameters,
**dadurch gekennzeichnet, dass**
der erste Parameter ein Druck ist und
der erste Parameter in einem Verteiler (144a, 144b, 144c) gemessen wird, in dem ein Material mitnehmender Luftstrom von einem Einlass zu mindestens zwei Auslässen verteilt wird.

2. Verfahren nach Anspruch 1, das ferner ein Steuern des Luftstroms umfasst, um einen vorbestimmten Parameterwert zu erzielen.

3. Verfahren nach Anspruch 2, wobei der vorbestimmte Parameterwert auf der Basis von mindestens des Materialtyps bestimmt wird.

4. Verfahren nach einem der vorhergehenden Ansprüche, wobei der erste Parameter stromabwärts von dem Mischen des Materials in den Luftstrom gemessen wird.

5. Verfahren nach einem der vorhergehenden Ansprüche, das ferner, während das Material mit der Hilfe des Luftstroms vorgeschoben wird, ein Messen eines zweiten Parameters, der den Luftstrom betrifft, und ein Steuern der Erzeugung des Luftstroms auf der Basis auch des zweiten Parameters umfasst.

6. Verfahren nach Anspruch 5, wobei der zweite Parameter der gleiche Parametertyp wie der erste Parameter ist und an einem Messpunkt in der Vorschubvorrichtung gemessen wird, der sich von einem Punkt unterscheidet, an dem der erste Parameter gemessen wird.

7. Verfahren nach Anspruch 5, wobei der zweite Parameter ein anderer Parametertyp als der erste Parameter ist und an im Wesentlichen dem gleichen Messpunkt in der Vorschubvorrichtung gemessen wird wie der erste Parameter.

8. Verfahren nach Anspruch 5, wobei der zweite Parameter ein anderer Parametertyp als der erste Parameter ist und an einem Messpunkt in der Vorschubvorrichtung gemessen wird, der sich von einem Punkt unterscheidet, an dem der erste Parameter gemessen wird.

9. Verfahren nach einem der vorhergehenden Ansprüche, wobei der Luftstrom zumindest teilweise durch Regulierung einer Lüftergeschwindigkeit gesteuert wird.

10. Verfahren nach einem der vorhergehenden Ansprüche, wobei der Luftstrom zumindest teilweise durch Regulierung eines Dämpfers gesteuert wird.

11. Landwirtschaftliches Gerät, das eine Vorschubvorrichtung (13, 14) zum Vorschieben von körnigem oder pulvrigem Material umfasst, umfassend:
eine Luftstrom erzeugende Vorrichtung (107),
eine Materialeinspritzvorrichtung (142a, 142b, 142c) zum Mischen von Material in den Luftstrom und
eine Steuereinheit (102) zum Steuern der Luftstrom erzeugenden Vorrichtung (107),
wobei ein erster Messsensor (108a, 108b, 108c) angeordnet ist, um, während das Material mit der Hilfe des Luftstroms vorgeschoben wird, einen ersten Parameter zu messen, der den Luftstrom betrifft, und
wobei die Steuereinheit (102) angeordnet ist, um ein Signal von dem ersten Messsensor zu empfangen und die Luftstrom erzeugende Vorrichtung (107) auf der Basis des Signals von dem ersten Messsensor (108a, 108b, 108c) zu steuern,
**dadurch gekennzeichnet, dass**
der erste Messsensor (108a, 108b, 108c) ein Drucksensor ist und
der erste Messsensor derart angeordnet ist, dass der Parameter in einem Verteiler (144a, 144b, 144c) gemessen wird, in dem ein Material mitnehmender Luftstrom von einem Einlass zu mindestens zwei Auslässen verteilt wird.

12. Landwirtschaftliches Gerät nach Anspruch 11, wobei die Steuereinheit (102) angeordnet ist, um die Luftstrom erzeugende Vorrichtung (107) durch Regulieren einer Lüftergeschwindigkeit und/oder durch Regulieren eines Öffnungsgrads eines Dämpfers (105) zu steuern.

13. Landwirtschaftliches Gerät nach einem der Ansprüche 11 oder 12, ferner umfassend:
einen zweiten Messsensor, der angeordnet ist, um einen zweiten Parameter zu messen, der den Luftstrom betrifft, während das Material mit der Hilfe des Luftstroms vorgeschoben wird,
wobei die Steuereinheit (102) angeordnet ist, um ein Signal von dem zweiten Messsensor zu empfangen und die Luftstrom erzeugende Vorrichtung (107) auf der Basis auch des Signals von dem zweiten Messsensor zu steuern.

## Revendications

1. Procédé de commande d'un outil agricole (1) comprenant un dispositif d'alimentation (13,14) pour l'alimentation en matière granulaire ou poudreuse, comprenant :
la génération d'un flux d'air,
l'alimentation en matière à l'aide du flux d'air,
la mesure d'un premier paramètre relatif au flux d'air pendant que la matière est apportée avec l'aide du flux d'air, et
le contrôle de la génération du flux d'air sur la base du premier paramètre,
**caractérisé en ce que**
le premier paramètre est une pression, et
le premier paramètre est mesuré dans un distributeur (144a, 144b, 144c) dans lequel le flux d'air entraînant la matière est distribué depuis une entrée vers au moins deux sorties.

2. Procédé selon la revendication 1, comprenant en outre le contrôle du flux d'air afin d'obtenir une valeur prédéterminée.

3. Procédé selon la revendication 2, dans lequel la valeur du paramètre prédéterminée est déterminée sur la base au moins du type de matière.

4. Procédé selon l'une quelconque des revendications précédentes, dans lequel le premier paramètre est mesuré en aval du mélange de la matière dans le flux d'air.

5. Procédé selon l'une quelconque des revendications précédentes, comprenant en outre, pendant l'apport de la matière à l'aide du flux d'air, la mesure d'un second paramètre relatif au flux d'air et le contrôle de la génération du flux d'air également sur la base du second paramètre.

6. Procédé selon la revendication 5, dans lequel le second paramètre est de même type de paramètre que le premier paramètre et est mesuré à un point de mesure du dispositif d'alimentation qui est différent d'un point où le premier paramètre est mesuré.

7. Procédé selon la revendication 5, dans lequel le second paramètre est d'un type de paramètre différent de celui du premier paramètre et est mesuré sensiblement au même point de mesure du dispositif d'alimentation que le premier paramètre.

8. Procédé selon la revendication 5, dans lequel le second paramètre est d'un type de paramètre différent de celui du premier paramètre et est mesuré de mesure à un point de mesure qui est différent d'un point où le premier paramètre est mesuré.

9. Procédé selon l'une quelconque des revendications précédentes, dans lequel le flux d'air est au moins partiellement contrôlé par régulation de la vitesse d'un ventilateur.

10. Procédé selon l'une quelconque des revendications précédentes, dans lequel le flux d'air est au moins partiellement contrôlé par régulation de la vitesse d'un saturateur.

11. Outil agricole comprenant un dispositif d'alimentation (13,14) pour l'alimentation en matière granulaire ou poudreuse, comprenant :
un dispositif générateur de flux d'air (107),
un dispositif d'injection de matière (142a, 142b, 142c) pour mélanger de la matière dans le flux d'air, et
une unité de commande (102) pour contrôler le dispositif générateur de flux d'air (107),
un premier capteur de mesure (108a, 108b, 108c) étant conçu pour mesurer, pendant que la matière est apportée à l'aide du flux d'air, un premier paramètre relatif au flux d'air, et
l'unité de commande (102) étant conçue pour recevoir un signal du premier capteur de mesure et pour commander le dispositif générateur de flux d'air (107) à partir du signal du premier capteur de mesure (108a, 108b, 108c),
**caractérisé en ce que**
le premier capteur de mesure (108a, 108b, 108c) est un capteur de pression, et
le premier capteur de mesure est conçu pour que le paramètre soit mesuré dans un distributeur (144a, 144b, 144c) dans lequel un flux d'air entraînant la matière est distribué depuis une entrée vers au moins deux sorties.

12. Instrument agricole selon la revendication 11, dans lequel l'unité de commande (102) est conçue pour commander le dispositif générateur de flux d'air (107) en régulant une vitesse de ventilateur et/ou en régulant un degré d'ouverture d'un amortisseur (105).

13. Instrument agricole selon l'une quelconque des revendications 11 ou 12, comprenant en outre :
un second capteur de mesure conçu pour mesurer un second paramètre relatif au flux d'air alors que la matière est apportée à l'aide du flux d'air,
l'unité de commande (102) étant conçue pour recevoir un signal du second capteur de mesure et pour commander le dispositif générateur de flux d'air (107) également à partir du signal du second capteur de mesure.
